# EUROPEAN PATENT SPECIFICATION

(11) **EP 1 961 539 B1**
(45) Date of publication and mention of the grant of the patent: **19.06.2013**
(21) Application number: 08003486.1
(22) Date of filing: 26.02.2008
(51) Int. Cl.: B01F 15/02, B28C 7/04, G01G 11/08, G01G 19/24

(54) **A method of weighing of loose fractions of a mixture and equipment for carrying out this method**
Verfahren zum Wiegen lose Bruchstücke von einem Mischgut und Vorrichtung zur Ausführung dieses Verfahrens
Procédé pour peser des composants en vrac d'un mélange et équipement pour mettre en oeuvre ce procédé

(30) Priority: 26.02.2007 CZ 20070157
(43) Date of publication of application: 27.08.2008
(73) Proprietor: Zeman, Milos, 357 31 Horní Slavkov (CZ)
(72) Inventor: Zeman, Milos, 357 31 Horní Slavkov (CZ)
(74) Representative: Hakr, Eduard

(56) References cited:
- AU-B2- 618 687
- FR-A5- 2 181 315
- GB-A- 986 884
- US-A1- 2002 191 482

## Description

### Field of the Invention

The present invention relates to a method of weighing of loose fractions forming a dose determined to be used in production of construction mixture by mixing of fractions of a dose in a mixer and to equipment for carrying out of this method.

### Background of the Invention

Several systems are now used to weigh loose mixtures, e.g. aggregate, in production of construction mixtures.

British patent number GB 986 884 discloses a method of weighing of loose fractions forming a dose to be used in production of construction mixture according to the preamble of claim 1 and an equipment for weighing loose fractions forming a dose of a construction mixture according to the preamble of claim 5, wherein a belt conveyor is used in place of a pocket conveyor.

The most widespread systems are an aggregate weighing apparatus or a conveyer scale in combination with a bucket, which bucket is filled after weighing (by emptying the weighing apparatus or by filling it with the conveyer scale) and transports individual aggregate doses to a mixer. However, this system exhibits several disadvantages. One of them is the limited concrete mixing plant output, which output is given by the length of the bucket displacement path. This length can be eliminated by using of a two-speed-motor for moving of the bucket or by using of a frequency converter, but only to a certain extent. Another disadvantage is the possibility of a crash in case of a motor brake failure and fall of a full bucket into the shaft causing path and bucket damage. Then, the production must be interrupted and it is necessary to wait for servicing, what can cause a problem how to meet the contracted orders.

Another system uses again an aggregate weighing apparatus (conveyer scale) and another conveyer conveying individual doses into a storage bin above the mixer. A disadvantage of this system is also the limited output. Considering the fact that weighing of other fractions (e.g. of cement, water, other additives) is usually more rapid than the weighing and transport of aggregate, the aggregate weighing rate is the key factor for the production output.

### Summary of the Invention

It is an objective of the present invention to suggest equipment allowing accurate and rapid weighing of loose mixtures, particularly of aggregate, and their transport into a mixer so as to reach the maximum output in case of a concrete mixing plant and minimum failure rate of the equipment used.

This objective is met by a method of weighing of loose fractions forming a dose determined to be used in production of construction mixture according to the teaching of claim 1.

According to one of the preferred embodiments dosing conveyers or dosing flaps are used as dosing means.

According to a preferable embodiment, after having brought all material of the last fraction of the dose into the storage bin, input of material of the first fraction of the next dose on the pocket conveyer is started, but before this material of the first fractions gets into the storage bin, the pocket conveyer is stopped.

According to another preferable embodiment, after having brought all material of the last fraction of the dose into the storage bin, and a pause, input of material of the first fraction of the next dose on the pocket conveyer is started in such a way that material of the first fraction of the next dose gets into the storage bin not sooner than after material of the previous dose is emptied from the storage bin into the mixer and the output opening of the storage bin has been closed again.

The objectives of the invention meets also equipment for weighing of loose fractions forming a dose determined to be used in production of construction mixture according to the teaching of claim 5.

According to a preferable embodiment, the dosing means are dosing conveyers or dosing flaps.

According to another preferable embodiment the pocket conveyer is placed on the first weighing device and the storage bin is placed on the second weighing device.

According to another one from the preferable embodiments, the first weighing device or the second weighing device comprise tensometric sensors.

### Brief Description of the Drawings

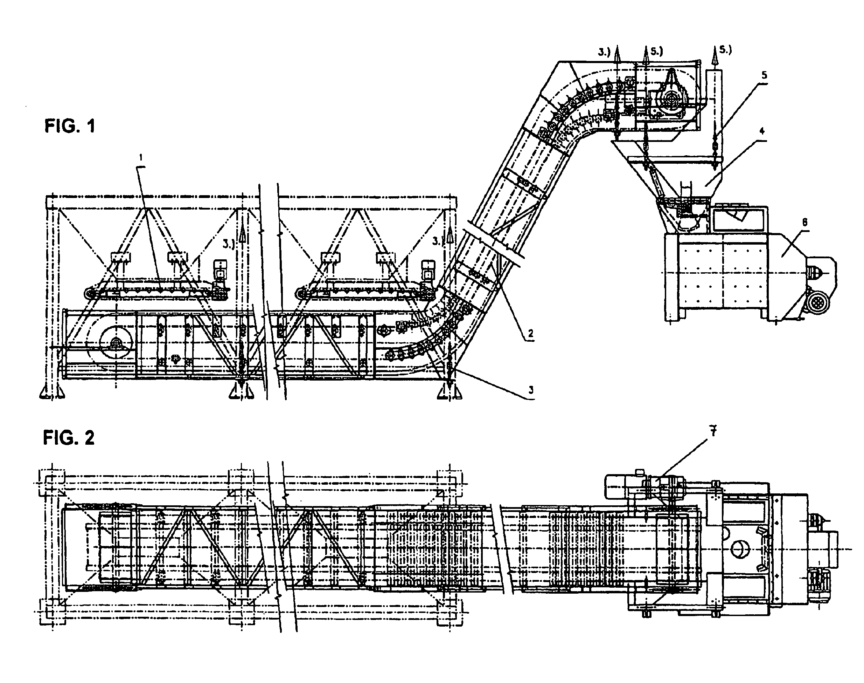

The invention will be now described in greater detail with reference to the attached drawings, in which drawings Fig. 1 is a front view of a preferable embodiment of the equipment according to the invention and of its parts, and Fig. 2 is a top plan view of the equipment from Fig. 1.

### Best mode for carrying out the invention

Figures 1 and 2 show a preferable embodiment of the equipment for weighing of loose fractions according to the invention. The following description of the equipment shown is oriented to the case of its use in weighing of aggregate. However, this equipment can likewise be used also for other loose fractions.

The equipment comprises dosing conveyers 1 (dosing flaps can also be used), which dosing conveyers 1 dose individual fractions of aggregate on a running pocket conveyer 2, which pocket conveyer 2 is weighed, i.e. it is placed on the first weighing device, for example on tensometric sensors 3. This pocket conveyer 2 conveys the weighed aggregate fraction into a storage bin 4 above a mixer 6, which storage bin 4 is also weighed, i.e. it is placed on the second weighing device, for example on tensometric sensors 5.

Further, operation of the equipment in batchwise production of construction mixtures, for example of concrete. In this production, it is necessary to weigh several subsequent aggregate doses, wherein, each dose comprises several fractions, and this in such a way that the next dose is already ready at the moment the dose of mixture produced has been emptied from the mixer 6.

The initial state is such that the pocket conveyer 2 and the aggregate storage bin 4 are empty. The emptying opening of the storage bin 4, dedicated for emptying of material contained in the storage bin 4 into the mixer 6, is closed. At first the pocket conveyer 2 is put into operation. At simultaneous weighing of the pocket conveyer 2 the dosing conveyer 1, which dosing conveyer 1 is conveying material of the required fraction on the pocket conveyer 2, is put into operation. In case the quantity of one fraction is greater than the capacity of the pocket conveyer 2, after a certain time, it takes place that a part of material of this fraction is already in the storage bin, and at the same time the remaining material of the fraction is still conveyed from the dosing conveyer 1 on the pocket conveyer 2. However, this state is not defective, because in such case simultaneous weighing of the storage bin 4, which is independent of the pocket conveyer 2 weighing, is carried out, and a total of both weights is read, so that also in such case it is easy to determine, on the basis of the weights determined by weighing, whether already all material of the given fraction was conveyed by the dosing conveyer 1 on the pocket conveyer 2.

Having finished dosing of one fraction, other fractions are weighed, one after the other, in the same way. It is an advantage that the aggregate is transported into the storage bin 4 above the mixer 6 already during the weighing. Therefore, no unnecessary undesirable pauses take place. Immediately after the weighing of the last fraction has been finished, it is possible to empty the storage bin 4 into the mixer 6, and this preferably also then, when a part of the material is still on the pocket conveyer 2. During emptying of the storage bin 4, this part of the material will be conveyed to the storage bin 4 and will fall through the opened storage bin 4 into the mixer 6, so that further saving of time will take place. After the pocket conveyer 2 and the storage bin 4 have been emptied, it is possible to close the storage bin 4 and to start weighing of the next dose. After the production has been finished, the pocket conveyer 2 is stopped.

To make the weighing even more rapid, it is possible to use only the weighing device 3 of the pocket conveyer 2 in some periods of time. Such case takes place for example if it is known that all material of one dose (i.e. all material of all fractions, the dose is composed of) has already been transported to the storage bin 4. In such case it is possible to start weighing of another dose on the pocket conveyer 2 independently of the weight of the storage bin 4, however with the limitation that the material of this next dose (i.e. the material of the first weighed fraction) must not get into the storage bin 4 sooner than the material of the previous dose has been emptied from the storage bin 4 through the emptying opening into the mixer 6 and the emptying opening of the storage bin 4 has been closed again. If it should happen, it would require interruption of the weighing and stopping of the pocket conveyer 2. After the storage bin 4 has been emptied and its emptying opening has been closed, the conveyer 2 is restarted and the weighing is continued.

However, such frequent stopping of the pocket conveyer 2 can be avoided by monitoring of the moment the emptying opening of the storage bin 4 has been closed after emptying of the storage bin 4 so that it is arranged that immediately after this moment the running pocket conveyer 2 has been filled already, and weighing of the next dose can take place without any stopping of the pocket conveyer 2.

In use of the invention it is suitable to use the known Flexowell model of the pocket conveyer (with carriers and side bellows). Preferably, the conveyer is driven by a motor 7 with a gearbox using electronically controlled soft start-up. Preferably, the storage bin 4 is provided with a pneumatically controlled flap.

The equipment according to the present invention allows increasing of output of the concrete mixing plant up to 40% in comparison to the existing technologies (e.g. to the system of a weighed conveyer and a bucket). The drop-out risk of the equipment is also decreased, because in case of this design, bucket fall and equipment damage are not possible.

## Claims

1. A method of weighing of loose fractions forming a dose determined to be used in production of construction mixture by mixing the fractions of the dose in a mixer (6), in which method material of the individual fractions having each predetermined weight is brought from individual dosing means (1) on a running pocket conveyer (2), wherein, at any given moment material of only one fraction is brought in, and material of the subsequent fraction is started to be brought on the pocket conveyer (2) only after all material of the previous fraction has been brought on the pocket conveyer (2), wherein, the material brought on the running pocket conveyer (2) is transported by the pocket conveyer (2) to a storage bin (4) with an closed output opening, said output opening being used for releasing the material into the mixer (6), and after all material of the last fraction has been brought from the dosing means (1) on the pocket conveyer (2), the output opening of the storage bin (4) is opened and the material is emptied through the storage bin (4) into the mixer (6), wherein the whole pocket conveyer (2) is being weighed to determine the weight of all the material being on the pocket conveyer (2), the material being conveyed by the running pocket conveyer (2) into the storage bin (4), and **characterized in that** simultaneously with weighing the whole pocket conveyer (2) an independent weighing of the storage bin (4) is carred out to determine weight of the material placed in the storage bin (4), and from the data of the weight of the material on the pocket conveyer (2) and in the storage bin (4) a moment is determined when all material of the given fraction is measured out and at that moment the input of the material of this fraction on the pocket conveyer (2) is interrupted, and in case that not all the fractions of the dose were brought on the pocket conveyer (2), input of the material of the next fraction on the pocket conveyer (2) is started.

2. A method of claim 1, characterzed in that the dosing means (1) are dosing conveyers or dosing flaps.

3. A method of claim 1 or 2, **characterized in that** after having brought all material of the last fraction of the dose into the storage bin (4), input of material of the first fraction of the next dose on the pocket conveyer (6) is started, but before this material of the first fractions gets into the storage bin (4), the pocket conveyer (2) is stopped.

4. A method of claim 1 or 2, **characterized in that** after having brought all material of the last fraction of the dose into the storage bin (4), and a pause, input of material of the first fraction of the next dose on the pocket conveyer (2) is started in such a way that material of the first fraction of the next dose gets into the storage bin (4) not sooner than after material of the previous dose is emptied from the storage bin (4) into the mixer (6) and the output opening of the storage bin (4) has been closed again.

5. Equipment for weighing loose fractions forming a dose of a construction mixture which is produced by mixing of the loose fractions of said dose in a mixer (6), the equipment comprising dosing means (1) for dispensing of the individual loose fractions of the dose on a pocket conveyer (2), a pocket conveyer (2) for transporting of the material of fractions into a storage bin (4), a storage bin (4) for storing the material of the fractions, the material is designated to be emptied from the storage bin into the mixer (6), **characterized in that** the pocket conveyer (2) is connected to a first weighing device (3) for weighing of the material placed on the pocket conveyer (2), and the storage bin (4) is connected with a second weighing device (5) for weighing of the material placed in the storage bin (4), whereas at simultaneous weighing of the pocket conveyer (2) the dosing means (1) of the required fraction conveys the required quantity of the material of said fraction onto the pocket conveyor (2).

6. Equipment according to claim 5, **characterized in that** the first weighing device (3) and the second weighing device (5) provide output to dosing means (1) of the required fraction to convey the required quantity of the material of respective fraction onto the pocket conveyor (2).

7. Equipment according to claim 5 or 6, **characterized in that** the dosing means (1) are dosing conveyers or dosing flaps.

8. Equipment according to any of claims 5 to 7, **characterized in that** the pocket conveyer (2) is placed on the first weighing device (3) and the storage bin (4) is placed on the second weighing device (5).

9. Equipment according to claim 8, **characterized in that** the first weighing device (3) or the second weighing device (5) comprise tensometric sensors.

## Patentansprüche

1. Verfahren für Wägen von Freifraktionen, die eine Dosis zum Verwenden in der Herstellung von Baumischungen durch das Mischen von Fraktionen der Dosis in einem Mischer (6) bilden, bei welchem Verfahren das Material von einzelnen Fraktionen, die je ein vorbestimmtes Gewicht haben, aus einzelnen Dosierungsmitteln (1) auf einem laufenden Becheförderer (2) zugeführt wird, wobei in jedem gegebenen Zeitpunkt nur ein Material einer Fraktion eingebracht wird und die Einbringung des Materials der folgenden Fraktion auf dem Becherförderer (2) nur erst dann anfängt, nachdem alles Material der vorhergehenden Fraktion auf dem Becherförderer (2) zugeführt wurde, wobei das Material, das auf dem laufenden Becherförderer (2) zugeführt wird, mit dem Becherförderer (2) in einen Speicher (4) mit einer geschlossenen Austrittsöffnung gefördert wird, welche Austrittsöffnung zum Freigeben des Materials in einen Mischer (6) verwendet wird, und nachdem alles Material der letzten Fraktion aus den Dosierungsmitteln (1) auf dem Becherförderer (2) zugeführt wurde, wird die Austrittsöffnung des Speichers (4) geöffnet und das Material wird aus dem Speicher (4) in den Mischer (6) entleert, wobei der ganze Becherförderer (2) zum Zwecke von Wägen des ganzen auf dem Förderer (2) gelagerten Materials gewogen und das auf dem laufenden Förderer (2) geförderte Material in den Speicher (4) transportiert wird, **dadurch gekennzeichnet, dass** simultan mit dem Wägen des ganzen Becherförderers (2) ein unabhängiges Wägen des Speichers (4) zum Zwecke von Bestimmung des Gewichts des in dem Speicher (4) untergebrachten Materials durchgeführt wird und aus den Daten über die Gewichte des Materials auf dem Becherförderer (2) und in dem Speicher (4) ein Zeitpunkt bestimmt wird, wenn alles Material der gegebenen Fraktion gemessen wurde, in welchem Zeitpunkt die Zuführung von Material dieser Fraktion auf den Becherförderer (2) unterbrochen wird, und im Falle, wenn nicht alle Fraktionen dieser Dosis auf dem Becherfösrderer (2) zugeführt worden sind, wird mit der Zufuhr der weiterer Fraktion auf dem Becherförderer (2) angefangen.

2. Verfahren nach dem Anspruch 1, **dadurch gekennzeichnet, dass** die Dosierungsmitteln (1) Dosierungsförderer oder Dosierungsklappen sind.

3. Verfahren nach dem Anspruch 1 oder 2, **dadurch gekennzeichnet, dass** nach der Zuführung vom ganzen Material der letzten Fraktion der gegebenen Dosis in den Speicher (4) mit der Zufuhr des Materials der ersten Fraktionen der folgenden Dose auf dem Becherförderer (2) angefangen wird, jedoch vorher, als diese Material in den Speicher (4) gelingt, wird der Becherförderer gestoppt.

4. Verfahren nach dem Anspruch 1 oder 2, **dadurch gekennzeichnet, dass** nach der Zuführung vom ganzen Material der letzten Fraktion der Dosis in den Speicher (4) und nach einer Pause mit der Zuführung des Materials der ersten Fraktion der folgenden Dose auf dem Becherförderer (2) so angefangen wird, dass das Material der ersten Fraktion der folgenden Dose nicht früher in den Speicher (4) gelingt, als das Material der vorhergehenden Dose aus dem Speicher (4) in den Mischer (6) entleert und die Austrittsöffnung des Speichers (4) wieder geschlossen wird.

5. Anlage für Wägen von Freifraktionen, die eine Dosis einer Baumischung bilden, die durch das Mischen von Freifraktionen dieser Dosis in einem Mischer (6) hergestellt wird, wobei die Anlage Dosierungsmittel (1) zum Verteilen von einzelnen Freifraktionen der Dosis auf einen Becherförderer (2), den Becherförderer (2) für den Transport des Materials von Fraktionen in einen Speicher (4), den Speicher (4) für Unterbringung des Materials von Fraktionen enthält, wobei dieses Material für das Entleeren aus dem Speicher in den Mischer (6) bestimmt ist, **dadurch gekennzeichnet, dass** der Becherförderer (2) an eine erste Waagevorrichtung (3) zum Wägen von auf einem Becherförderer (2) untergebrachten Material und der Speicher (4) an eine zweite Waageeinrichtung (5) für Wägen von in dem Speicher (4) untergebrachten Material angeknilpft sind, wobei beim simultanen Wägen des Becherförderer (2) die Dosierungsmittel (1) der geforderten Fraktion eine geforderte Menge des Materials dieser Fraktion auf den Becherförderer (2) transportieren.

6. Anlage nach dem Anspruch 5, **dadurch gekennzeichnet, dass** die erste Waageeinrichtung (3) und die zweite Waageeinrichtung (5) einen Austritt zu den Dosierungsmitteln (1) der geforderten Fraktion zum Zwecke des Transports der geforderten Menge von Material der zugehörigen Fraktion auf den Becherförderer (2) bilden.

7. Anlage nach dem Anspruch 5 oder 6, **dadurch gekennzeichnet, dass** die Dosierungsmittel (1) Dosierungsförderer oder Dosierungsklappen sind.

8. Anlage nach jedem beliebigen Anspruch 5 bis 7, **dadurch gekennzeichnet, dass** der Becherförderer (2) auf der ersten Waageeinrichtung (3) und der Speicher (4) auf der zweiten Waageeinrichtung (5) untergebracht sind.

9. Anlage nach dem Anspruch 8, **dadurch gekennzeichnet, dass** die erste Waageeinrichtung (3) oder die zweite Waageeinrichtung (5) Dehnungsmessersensoren enthalten.

## Revendications

1. Méthode de pesage de fractions libres formant une dose destinée à être utilisée pour la production de mélanges de construction en mélangeant les fractions de la dose dans un mélangeur (6), où le matériau des différentes fractions ayant chacun un poids prédéterminé est amené de moyens de dosage individuel (1) sur un convoyeur courant à poches (2), où, à tout moment, est amené le matériau d'une seule fraction, et le matériau de la fraction suivante commence à être amené sur le convoyeur à poches (2)seulement après que tout le matériau de la fraction précédente ait été amené sur le convoyeur à poches (2), alors que le matériau amené sur le convoyeur courant à poches (2) est transporté par le convoyeur à poches (2) vers une cuve de stockage (4) avec une ouverture de déversement fermée, ladite ouverture de déversement étant utilisée afin de libérer le matériau dans le mélangeur (6), et après que tout le matériau de la dernière fraction ait été amené de moyens de dosage individuel (1) sur le convoyeur à poches (2), l'ouverture de déversement du réservoir de stockage (4) est ouverte et le matériau est vidé à travers la cuve de stockage (4) dans le mélangeur (6), alors que le convoyeur à poches (2) entier est pesé afin de déterminer le poids de tout le matériau présent sur le convoyeur (2), le matériau étant transporté sur le convoyeur courant (2) dans la cuve de stockage (4), et **caractérisé par** ce que simultanément avec le pesage du convoyeur à poches entier (2), un pesage indépendant de la cuve de stockage est effectué afin de déterminer le poids du matériau placé dans la cuve de stockage (4), et sur la base de données sur le poids du matériau sur le convoyeur à poches (2) et dans la cuve de stockage (4), un instant est déterminé où tout le matériau d'une fraction donnée est mesuré, auquel instant l'approvisionnement du matériau de cette fraction sur le convoyeur à poches (2) est interrompu, et au cas où toutes les fractions de la dose n'ont pas été amenées sur le convoyeur à poches (2), l'approvisionnement du matériau de la prochaine fraction sur le convoyeur à poches (2) est entamé.

2. Une méthode de la revendication 1, **caractérisée par** ce que les moyens de dosage individuels (1) sont un convoyeur doseur ou des rabats de dosage.

3. Une méthode de la revendication 1 ou 2, **caractérisée par** ce qu'après que tout le matériau de la dernière fraction d'une dose ait été amené dans la cuve de stockage (4), l'apport du matériau de la première fraction de la prochaine dose est entamé, mais avant que ce matériau des premières fractions arrive dans le réservoir de stockage (4), le convoyeur à poches (2) est arrêté.

4. Une méthode de la revendication 1 ou 2, **caractérisée par** ce qu' après avoir amené tout le matériau de la dernière fraction de la dose dans le réservoir de stockage (4), et une pause, l'apport du matériau de la première fraction de la prochaine dose sur le convoyeur à poches (2) est entamé de manière telle que le matériau de la première fraction de la prochaine dose n'arrive dans la cuve de stockage (4) pas avant qu'après que le matériau de la dose précédente soit vidé de la cuve de stockage (4) dans le mélangeur (6) et l'ouverture de déversement du réservoir de stockage (4) ait été refermé à nouveau.

5. L'équipement pour peser les fractions libres formant une dose de mélange de construction produite par le mélange de fractions libres de ladite dose dans un mélangeur (6), l'équipement comprenant les moyens de dosage (1) pour libérer les fractions libres individuelles sur le convoyeur à poches (2), le convoyeur à poches (2) pour le transport du matériau des fractions dans la cuve de stockage (4), une cuve de stockage (4) pour stocker le matériau des fractions, le matériau étant conçu pour être vidé du réservoir de stockage dans le mélangeur (6), **caractérisé par** ce que le convoyeur à poches (2) est connecté à un premier appareil de pesage (3) pour le pesage du matériau placé sur le convoyeur à poches (2), et la cuve de stockage (4) est connectée à un second appareil de pesage (5), pour peser le matériau dans la cuve de stockage (4), alors qu'en pesant simultanément le convoyeur à poches (2), les moyens de dosage (1) de la fraction demandée transfèrent la quantité demandée du matériau de ladite fraction sur le convoyeur à poches (2).

6. L'équipement selon la revendication 5, **caractérisé par** ce que le premier appareil de pesage (3) et le second appareil de pesage (5), fournissent des sorties aux moyens de dosage (1) afin de transférer la quantité demandée de matériau de la fraction respective sur le convoyeur à poches (2).

7. L'équipement selon la revendication 5 ou 6, **caractérisé par** ce que les moyens de dosage (1) sont un convoyeur doseur ou des rabats de dosage.

8. L'équipement selon toute revendication de 5 à 7, **caractérisé par** ce que le convoyeur à poches (2) est placé sur le premier appareil de pesage (3) et la cuve de stockage (4) est placé sur le second appareil de pesage (5).

9. L'équipement selon la revendication 8, **caractérisé par** ce que le premier appareil de pesage (3) ou le second appareil de pesage (5) comprennent des capteurs densimétriques.
